# EUROPEAN PATENT APPLICATION

(11) **EP 2 075 905 A1**
(43) Date of publication of application: **01.07.2009**
(21) Application number: 07150455.9
(22) Date of filing: 28.12.2007
(51) Int. Cl.: H02P 9/10, H02P 9/46, F03D 7/04, F03D 9/00

(54) **Method and system for maintaining magnetisation of a wind turbine generator during power grid faults**

(71) Applicant: Vestas Wind Systems A/S, 8940 Randers (DK)
(72) Inventor: Garcia, Jorge Martinez, 50009, Zaragoza (ES); Navarro, José Antonio Domínguez, 50018, Zaragoza (ES)
(74) Representative: Inspicos A/S

(57) **Abstract**

The present invention relates to a wind turbine comprising an externally magnetised generator for generating electrical power to be delivered to an associated power supply grid. The wind turbine further comprises means for electrically disconnecting the externally magnetised generator of the wind turbine from the associated power supply grid during a grid fault, energy storing means adapted to provide electrical energy to the externally magnetised generator during the grid fault so that said externally magnetised generator essentially maintains its magnetisation during the grid fault, and power adsorption means adapted to absorb electrical power generated by the externally magnetised generator during the grid fault. The present invention further relates to a method and an electrical arrangement for carrying out the present invention.

## Description

### FIELD OF THE INVENTION

The present invention relates to a wind turbine, a method and a system for maintaining magnetisation of an electrical generator of a wind turbine during a power grid fault. In particular, the present invention relates to a wind turbine, a method and a system where essentially optimal or nominal working conditions of the wind turbine is maintained during power grid faults even though the wind turbine is completely disconnected from the power grid during power grid faults.

### BACKGROUND OF THE INVENTION

In the field wind turbine power generation various power dissipation arrangements for dissipating electrical power during grid faults have been suggested. An example of such an arrangement is disclosed in WO 2004/070936.

WO 2004/070936 relates to a method and an apparatus for controlling a power-grid connected doubly fed wind turbine generator during grid faults. During grid faults the stator windings of the wind turbine generator are disconnected from the power grid and impedances for dissipating at least part of the power generated by the wind turbine during grid fault condition are connected to the stator windings. In this way a certain magnetisation of the generator can be maintained via the grid. After removal of the grid fault condition the generator is synchronised to the power grid and the impedances are disconnected and the stator windings are reconnected to the power grid. In this way, it is possible to keep the wind turbine generator at least partly magnetised during grid faults and thus ready for delivering power to the power grid as soon as the grid voltage is re-established after the fault.

The wind turbine generator of WO 2004/070936 is a doubly fed asynchronous generator. The magnetisation of the wind turbine generator of WO 2004/070936 is provided by the power grid via a rotor converter. Thus, if magnetisation of the generator is to be maintained during a grid fault the rotor of the generator should remain connected through a power converter to the power grid during said grid fault. Hence, a complete disconnection of the wind turbine generator of WO 2044/070936 will, among other severe operational disturbances, result in an immediate demagnetisation of the generator.

It is an object of the present invention to ensure that an externally magnetised wind turbine generator can be operated at nominal working condition during grid faults even though the wind turbine generator is completely disconnected from the power grid.

### SUMMARY OF THE INVENTION

The above-mentioned object is complied with by providing, in a first aspect, a wind turbine comprising an externally magnetised generator for generating electrical power to be delivered to an associated power supply grid, the wind turbine further comprising
- means for electrically disconnecting the externally magnetised generator of the wind turbine from the associated power supply grid during a grid fault,
- energy storing means adapted to provide electrical energy to the externally magnetised generator during the grid fault so that said externally magnetised generator essentially maintains its magnetisation during the grid fault, and
- power adsorption means adapted to absorb electrical power generated by the externally magnetised generator during the grid fault.

The present invention is capable of reducing the loads on wind turbine gearboxes and the rest of the mechanical wind turbine system by keeping the wind turbine running at nominal working conditions during a grid fault. In this way it may be prevented that the maximum mechanical load of the gearbox is not exceeded.

The present invention is of particular relevance for stall regulated wind turbines. A stall regulated wind turbine should be understood as a wind turbine where the rotor blades are mounted with a fixed angle to the rotor hub. At wind speeds below a value, ν_{*P*max}, corresponding to maximum power generation a laminar flow is obtained around the rotor blades. When wind speeds exceed ν_{*P*max} the flow around the rotor blades starts to detach from the blade and turbulence occur behind the rotor blade.

The size of the wind turbine may vary from some hundreds of kW to several MW. Furthermore, the wind turbine may be positioned on land or at sea as an off-shore wind turbine.

Normal working conditions may be present as long as the grid voltage level is in the vicinity of a nominal grid voltage level. The term vicinity is here to be understood as a grid voltage dip of up to 10 % of the nominal grid voltage level. The duration of a grid fault may be 100-600 ms.

The means for electrically disconnecting the externally magnetised generator of the wind turbine from the associated power supply grid may comprise a circuit breaker or circuit breaker arrangement being arranged to disconnect both the stator and rotor windings from the associated power grid.

The term power absorption means should be interpreted broadly. Thus, the power absorption means may involve a device for dissipation/burning off of electrical power only. Alternatively, the power absorption means may involve a device capable of storing electrical energy for later use. Such later use may involve heating of for example water or it may involve grid frequency regulation in case the wind turbine is unable to generate sufficient power to increase a grid frequency.

The power absorption means may comprise one or more power resistors, said one or more power resistors being individually electrically accessible, or accessible in groups comprising a plurality of power resistors. In case the power absorption means comprises a plurality of power resistors, said power resistors may be coupled in series or in parallel.

Alternatively or in addition the power absorption means may comprise one or more capacitors, said one or more capacitors being individually electrically accessible, or accessible in groups comprising a plurality of capacitors. In case the power absorption means comprises a plurality of capacitors, said capacitors may be coupled in series or in parallel, and the electrical power absorbed in said plurality of capacitors may be stored for later use, such as for heating purposes or grid frequency regulation. In order to accumulate electrical energy in the one or more capacitors appropriate rectifier means, such as a inverter with active switches, such as IGBT's, MOSFET or thyristors or a passive rectifier bridge, is required in order to rectify the generated AC power prior to storing the power in the one or more capacitors. In this way the power absorption means may be operated as traditional batteries.

The resistance and/or capacitance of the power absorption means may be variable so that the power absorption means may constitute a variable load. In case the power absorption means is a resistive load only, the load should preferably be designed to dissipate 110% of the active power of the wind turbine generator during a maximum design time fault of around 1,5 seconds. In case the power absorption means is a capacitive load only, the load should preferably be designed to absorb around 40% of the apparent power of the wind turbine generator.

The energy storing means may comprise one or more capacitors, said one or more capacitors being individually electrically accessible, or accessible in groups comprising a plurality of capacitors. The capacitance of the energy storing means may be variable. The one or more capacitors of the energy storing means may be AC-type capacitors. They can be switched in and out by appropriate switching means in order to maintain the magnetization level of the generator during grid faults, i.e. when the wind turbine is disconnected from the power supply grid.

The wind turbine may further comprise power regulation means adapted to regulate an amount of power being absorbed in the power absorption means. The power absorption means and the power regulation means may form part of the wind turbine. In particular, the power absorption means and the power regulation means may be installed in the nacelle of the wind turbine, or they may be positioned on or near the foundation of the wind turbine.

The power regulation means may comprise first and second controllable switching elements adapted to be operated in an at least partly conducting mode of operation during the grid fault. Appropriate control means may be provided for controlling the first and second controllable switching elements which may be arranged in an anti-parallel configuration.

The first and second controllable switching elements may comprise a first and a second thyristor, respectively, or comprise a first and a second IGBT, respectively. However, other types of controllable silicon-based switching devices may also be applicable.

In a second aspect, the present invention relates to a method for maintaining essentially normal working conditions of a wind turbine during a power grid fault, the method comprising the steps of
- disconnecting an externally magnetised generator of the wind turbine from an associated power supply grid when a grid fault is detected,
- providing energy storing means, and providing, from said energy storing means, electrical energy to the externally magnetised generator of the wind turbine during the grid fault so that said externally magnetised generator essentially maintains its magnetisation during the grid fault,
- providing power absorption means, and absorb electrical power generated by the externally magnetised generator during the grid fault in said power absorption means, and
- reconnecting the wind turbine to the associated power supply grid when the grid fault is no longer present.

Again, the power absorption means may comprise one or more power resistors, said one or more power resistors being individually electrically accessible, or accessible in groups comprising a plurality of power resistors. In case the power absorption means comprises a plurality of power resistors, said power resistors may be coupled in series or in parallel.

Alternatively or in addition the power absorption means may comprise one or more capacitors, said one or more capacitors being individually electrically accessible, or accessible in groups comprising a plurality of capacitors. In case the power absorption means comprises a plurality of capacitors, said capacitors may be coupled in series or in parallel, and the electrical power absorbed in said plurality of capacitors may be stored for later use, such as for heating purposes or grid frequency regulation. Again, appropriate rectifier means may be provided whereby the power absorption means may be operated as traditional batteries.

In case the power absorption means is a pure resistive load it should preferably be designed to dissipate 110% of the active power of the wind turbine generator during a maximum design time fault of around 1,5 seconds. In case the power absorption means is a pure capacitive load, the load should preferably be designed to absorb around 40% of the apparent power of the wind turbine generator.

The resistance and/or capacitance of the power absorption means may be variable so that the power absorption means may constitute a variable load.

The energy storing means may comprise one or more capacitors, said one or more capacitors being individually electrically accessible, or accessible in groups comprising a plurality of capacitors. The capacitance of the energy storing means may be variable. The one or more capacitors of the energy storing means may be AC-type capacitors. They can be switched in and out by appropriate switching means in order to maintain the magnetization level of the generator during grid faults, i.e. when the wind turbine is disconnected from the power supply grid.

The method according to the second aspect of the present invention may further comprise the step of providing power regulation means, and regulate, using said power regulation means, an amount of power being absorbed in the power absorption means. The power regulation means may comprise first and second controllable switching elements, said first and second controllable switching means being operable in an at least partly conducting mode of operation during the grid fault.

The method may further comprise the step of providing control means, and control, using said control means, the first and second controllable switching elements during the grid fault.

The first and second controllable switching elements may be arranged in an anti-parallel configuration. In particular, the first and second controllable switching elements may comprise a first and a second thyristor, respectively, or comprise a first and a second IGBT, respectively. Other types of controllable silicon-based switching devices may, however, also be applicable.

In a third aspect, the present invention relates to a system or arrangement for maintaining essentially normal working conditions of a wind turbine comprising an externally magnetised generator during a grid fault, the system comprising
- means for electrically disconnecting the externally magnetised generator of the wind turbine from an associated power supply grid during grid faults,
- energy storing means adapted to provide electrical energy to the externally magnetised generator of the wind turbine during the grid fault so that said externally magnetised generator essentially maintains its magnetisation during the grid fault, and
- power absorption means adapted to absorb electrical power generated by the externally magnetised generator during the grid fault.

As previously mentioned, the means for electrically disconnecting the externally magnetised generator of the wind turbine from the associated power supply grid may comprise a circuit breaker or circuit breaker arrangement being arranged to disconnect both the stator and rotor windings from the associated power grid.

Again, the power absorption means may comprise one or more power resistors, said one or more power resistors being individually electrically accessible, or accessible in groups comprising a plurality of power resistors. In case the power absorption means comprises a plurality of power resistors, said power resistors may be coupled in series or in parallel.

Alternatively or in addition the power absorption means may comprise one or more capacitors, said one or more capacitors being individually electrically accessible, or accessible in groups comprising a plurality of capacitors. In case the power absorption means comprises a plurality of capacitors, said capacitors may be coupled in series or in parallel, and the electrical power absorbed in said plurality of capacitors may be stored for later use, such as for heating purposes or grid frequency regulation. Again, appropriate rectifier means may be provided whereby the power absorption means may be operated as traditional batteries.

The resistance and/or capacitance of the power absorption means may be variable so that the power absorption means may constitute a variable load. In case the power absorption means is a pure resistive load it should preferably be designed to dissipate 110% of the active power of the wind turbine generator during a maximum design time fault of around 1,5 seconds. In case the power absorption means is a pure capacitive load, the load should preferably be designed to absorb around 40% of the apparent power of the wind turbine generator.

The energy storing means may comprise one or more capacitors, said one or more capacitors being individually electrically accessible, or accessible in groups comprising a plurality of capacitors. The capacitance of the energy storing means may be variable. The one or more capacitors of the energy storing means may be AC-type capacitors. They can be switched in and out by appropriate switching means in order to maintain the magnetization level of the generator during grid faults, i.e. when the wind turbine is disconnected from the power supply grid.

The electrical arrangement may further comprise power regulation means adapted to regulate an amount of power being absorbed in the power absorption means. The power regulation means may comprise first and second controllable switching elements adapted to be operated in an at least partly conducting mode of operation during the grid fault. Appropriate control means adapted to control the first and second controllable switching elements may be provided.

The first and second controllable switching elements may be arranged in an anti-parallel configuration, and the first and second controllable switching elements may comprise a first and a second thyristor, respectively, or comprise a first and a second IGBT, respectively. Other types of controllable silicon-based switching devices may, however, also be applicable.

### BRIEF DESCRIPTION OF THE INVENTION

The present invention will now be disclosed in details with reference to the accompanying figures, wherein
Fig. 1 shows a first embodiment of the present invention,
Fig. 2 shows a wind turbine in an isolated mode of operation,
Fig. 3 shows a second embodiment of the present invention, and
Fig. 4 shows a third embodiment of the present invention.

While the invention is susceptible to various modifications and alternative forms, specific embodiments have been shown by way of examples in the figures and will be described in details herein. It should be understood, however, that the invention is not intended to be limited to the particular forms disclosed. Rather, the invention is to cover all modifications, equivalents, and alternatives falling within the spirit and scope of the invention as defined by the appended claims.

### DETAILED DESCRIPTION OF THE INVENTION

In its broadest aspects the present invention relates to a wind turbine, a method and a system for maintaining optimal or nominal working conditions of the wind turbine during power supply grid faults. According to the present invention a wind turbine, which is completely disconnected from the power grid during a grid fault, may be kept spinning at nominal or optimal working conditions. Thus, even though the wind turbine is completely disconnected from the power grid during grid faults its magnetisation and its production of electricity is maintained. By keeping the wind turbine generator running at nominal working conditions during grid fault the reconnection of the generator to the power grid when the grid fault is no longer present becomes fast and simple.

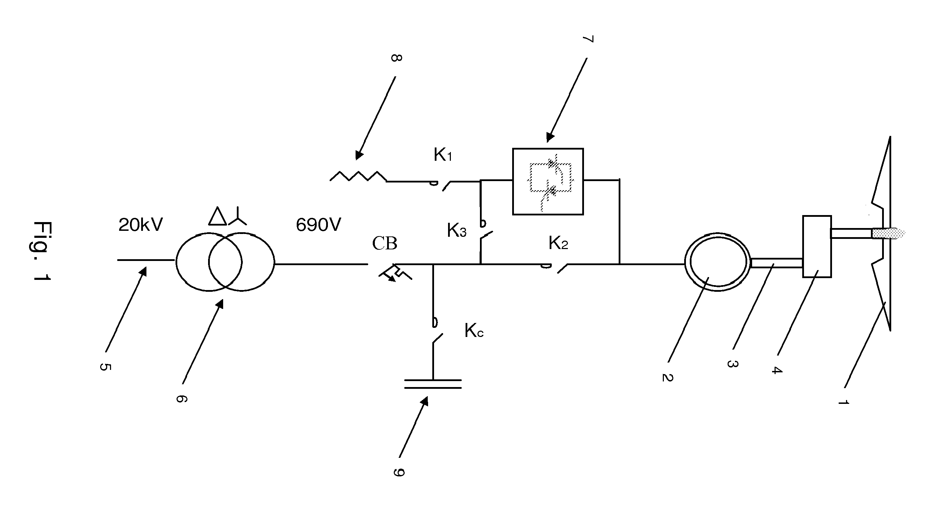

Referring now to Fig. 1 a wind turbine according to the present invention is depicted. The wind turbine comprises a set of rotatably arranged rotor blades 1 operatively coupled to an electrical wind turbine generator 2, such as an induction generator, through a drive train 3. The drive train optionally involves a gear box 4. During normal working conditions electrical power is fed from the electrical wind turbine generator 2 to the power supply grid 5 via a three phase grid transformer 6. The grid transformer 6 transforms the wind turbine generator voltage, typically 690 V, to an appropriate grid voltage level, such as for example 20 kV. The windings of the grid transformer depicted in Fig. 1 are implemented as a star/delta connection, but other types of connections are also applicable.

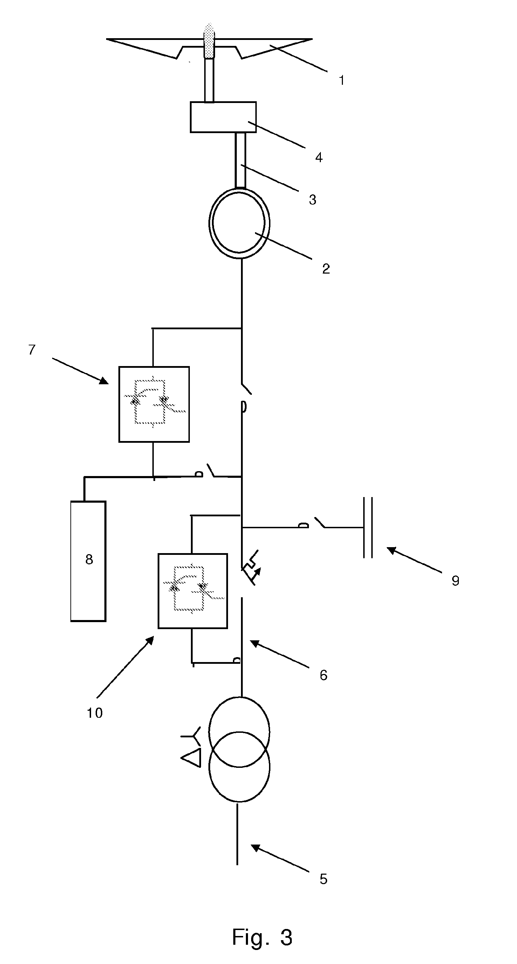

A circuit breaker CB is provided for disconnecting the wind turbine from the power supply grid when a grid fault has been detected. In addition, the circuit breaker CB is used for reconnecting the wind turbine to the power supply grid when the grid fault is no longer present. Reconnection of the wind turbine to the power supply grid may optionally be performed by a thyristor coupling as depicted in Fig. 3.

The wind turbine further comprises a resistive and/or capacitive power reservoir 8 for absorbing electrical power in case the wind turbine is disconnected from the power supply grid 5.

In order to accumulate electrical energy in a capacitive power reservoir appropriate rectifier means, such as an inverter with active switches, such as IGBT's, MOSFET or thyristors or a passive rectifier bridge, is required in order to rectify the generated AC power prior to storing the power in the capacitive power reservoir. In this way the power absorption means may be operated as traditional batteries. The accumulated electrical power can be stored for later use. Such later use may involve heating of for example water or it may involve grid frequency regulation in case the wind turbine is unable to generate sufficient power to increase a grid frequency.

The amount of electrical power to be absorbed in the power reservoir 8 is controlled by a number of controllable switching elements. The controllable switching elements, which are arranged in an anti/parallel arrangement, form part of a power regulation module 7.

The controllable switching elements typically involve a first and a second thyristor, or alternatively, a first and a second IGBT, respectively. Appropriate control means are provided for controlling the operation of the first and second controllable switching elements so that the wind turbine is maintained at optimal conditions even though its stator windings are disconnected from the power supply grid during a grid fault.

The wind turbine further comprises a capacitor bank 9, said capacitor bank 9 being adapted to provide sufficient magnetization energy to the rotor windings of the generator in order to keep the generator of the wind turbine fully magnetized during grid faults, i.e. to keep the generator of the wind turbine fully magnetized even though the generator is electrically disconnected from the power supply grid. Thus, even through the wind turbine generator, including the rotor windings of the generator, is electrically disconnected from the power supply grid, the magnetization of the generator can be maintained by magnetizing the generator using energy accumulated in the capacitor bank 9.

The capacitor bank 9 can be implemented as a plurality of AC-type capacitors each being accessible via one or more controllable switching elements. Thus, the capacitor bank 9 can be switched in and out by appropriate switching means in order to maintain the magnetization level of the generator during grid faults, i.e. when the wind turbine is disconnected from the power supply grid.

A number of contactors, K₁, K₂, K₃ and K_{C} are provided in order to couple the various electrical elements of the wind turbine in and/or out of operation.

The wind turbine depicted in Fig. 1 is operated as follows in order to carry out a method according to the present invention.

During normal operation contactor K₂ is closed while contactors K₁, K₃ and K_{C} are all open. However, it should be noted that contactor K_{C} may be closed during normal operation in case the capacitor bank 9 is to be used for compensating the magnetization current drawn by the wind turbine generator. During normal working conditions circuit breaker CB is closed as well.

If a grid fault is detected, i.e. if the grid voltage falls to an undesired level, the circuit breaker CB is opened, contactor K₁ is closed just after the start up and contactor K_{C} is closed and the controllable switching elements are activated in order to initiate absorption of electrical power in the power reservoir 8 which, as previously mentioned, can be of resistive and/or capacitive nature. The electrical power accumulated in the in the capacitor bank 9 maintains the wind turbine generator 2 magnetized during the grid fault. K₃ is used for during start-up of the wind turbine.

The grid voltage is measured by appropriate sensor means and the measured grid voltage is used as an input signal to a control module which is capable of generating appropriate control signals to the first and second controllable switching elements. Moreover, appropriate voltage sensor means for measuring the voltage level on wind turbine side of the circuit breaker CB should be provided. Thus, by measuring the voltage levels on both sides of the circuit breaker CB a proper reconnection of the wind turbine to the power supply grid when the grid voltage is recovered is facilitated in that both voltage levels may be phase synchronized prior to reconnection. In this way transients caused by phase mismatch is minimized. Typically, a grid fault is present if a measured grid voltage is below 80% of the nominal grid voltage. When the grid voltage has reached a level of 90% of its nominal the grid voltage has recovered.

Thus, according to the present invention the wind turbine generator can be operated at nominal working conditions during a grid fault even through the generator is electrically disconnected from the power supply grid during said grid fault, i.e. the generator is prevented from launching its generated power into the power supply grid. The amount of electrical power generated during a grid fault is absorbed in a power reservoir, optionally for later use. Such later use may involve heating purposes, such as for heating water or grid frequency regulation in case the wind turbine is unable to generate sufficient power to increase a grid frequency.

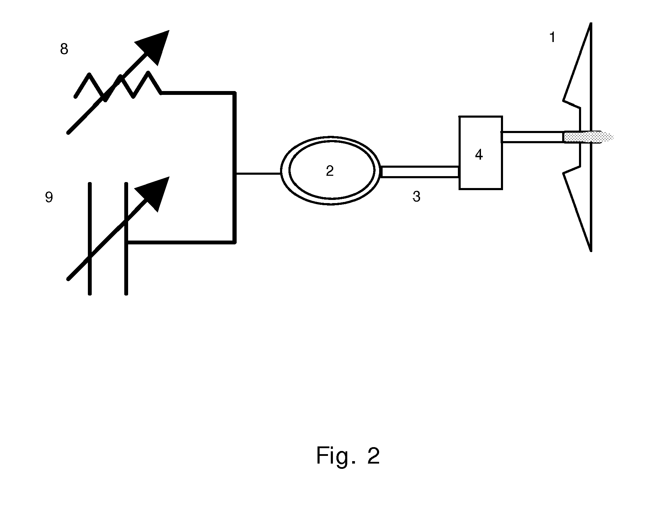

Fig. 2 shows a schematic depiction of a wind turbine disconnected from the power supply grid. As seen, the power reservoir 8 absorbs generated electrical power from the wind turbine generator 2 which is kept magnetized by the variable capacitor bank 9. Thus, it is possible to maintain and control the speed and the electrical torque of the wind turbine during a grid fault. When the grid fault is no longer present the wind turbine may be reconnected to the grid because the speed and the electrical torque are unchanged compared to the working conditions prior to the grid fault.

Fig. 3 shows a second embodiment of the present invention. Compared to Fig. 1 the wind turbine of Fig. 3 is connected to the grid via a traditional soft-starter 10 comprising a pair of controllable switching elements arranged in an anti/parallel arrangement. The controllable switching elements typically involve a first and a second thyristor, or alternatively, a first and a second IGBT, respectively. Other types of controllable silicon-based switching devices may, however, also be applicable.

Appropriate control means are provided for controlling the operation of the first and second controllable switching elements of soft-starter 10. In Fig. 3 the contactor K₁ (of Fig. 1) is included in the power reservoir 8. As previously mentioned the power reservoir may be of resistive and/or capacitive nature. In case of a capacitive power reservoir an AC/DC converter is required in order to rectify the generated AC power before storing it in the power reservoir. The magnetization energy for keeping the wind turbine generator magnetized is provided from the energy reservoir 9. Magnetization energy may be provided to the generator via a converter connected in parallel with the generator.

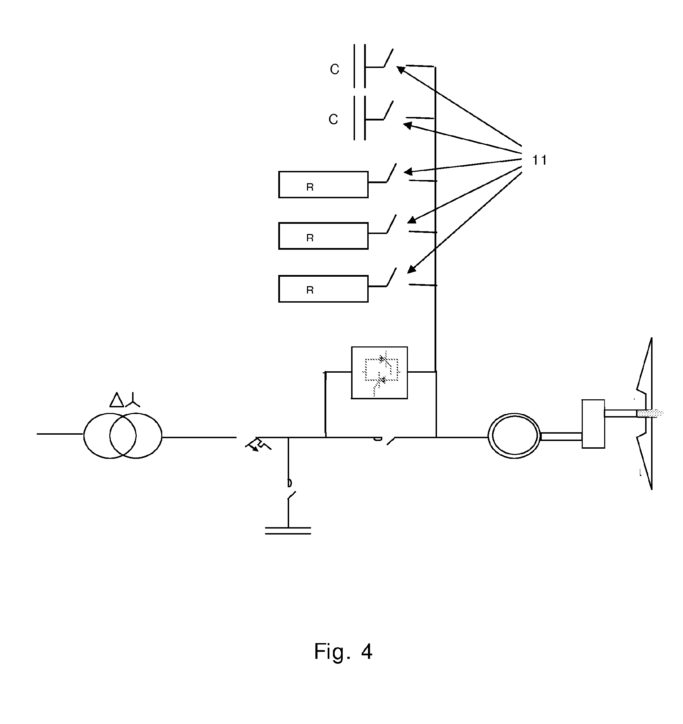

Fig. 4 shows a third embodiment of the present invention. Compared to Fig. 1 the wind turbine of Fig. 4 comprises a power reservoir comprising a plurality of resistors R and capacitors C coupled in parallel. A number of controllable switches 11 allow electrical access to each of the resistors/capacitors. In Fig. 4 a contactor K₁ is included in each of the resistors R or capacitors C.

## Claims

1. A wind turbine comprising an externally magnetised generator for generating electrical power to be delivered to an associated power supply grid, the wind turbine further comprising
- means for electrically disconnecting the externally magnetised generator of the wind turbine from the associated power supply grid during a grid fault,
- energy storing means adapted to provide electrical energy to the externally magnetised generator during the grid fault so that said externally magnetised generator essentially maintains its magnetisation during the grid fault, and
- power adsorption means adapted to absorb electrical power generated by the externally magnetised generator during the grid fault.

2. A wind turbine according to claim 1, wherein the power absorption means comprises one or more power resistors, said one or more power resistors being individually electrically accessible, or accessible in groups comprising a plurality of power resistors.

3. A wind turbine according to claim 1 or 2, wherein the energy storing means comprises one or more capacitors, said one or more capacitors being individually electrically accessible, or accessible in groups comprising a plurality of capacitors.

4. A wind turbine according to any of claims 1-3, further comprising power regulation means adapted to regulate an amount of power being absorbed in the power absorption means.

5. A wind turbine according to claim 4, wherein the power regulation means comprises first and second controllable switching elements adapted to be operated in an at least partly conducting mode of operation during the grid fault.

6. A wind turbine according to claim 5, further comprising control means adapted to control the first and second controllable switching elements.

7. A wind turbine according to claim 5 or 6, wherein the first and second controllable switching elements are arranged in an anti-parallel configuration.

8. A wind turbine according to any of claims 5-7, wherein the first and second controllable switching elements comprise a first and a second thyristor, respectively, or comprise a first and a second IGBT, respectively.

9. A method for maintaining essentially normal working conditions of a wind turbine during a power grid fault, the method comprising the steps of
- disconnecting an externally magnetised generator of the wind turbine from an associated power supply grid when a grid fault is detected,
- providing energy storing means, and providing, from said energy storing means, electrical energy to the externally magnetised generator of the wind turbine during the grid fault so that said externally magnetised generator essentially maintains its magnetisation during the grid fault,
- providing power absorption means, and absorb electrical power generated by the externally magnetised generator during the grid fault in said power absorption means, and
- reconnecting the wind turbine to the associated power supply grid when the grid fault is no longer present.

10. A method according to claim 9, wherein the power absorption means comprises one or more power resistors, said one or more power resistors being individually electrically accessible, or accessible in groups comprising a plurality of power resistors.

11. A method according to claim 9 or 10, wherein the energy storing means comprises one or more capacitors, said one or more capacitors being individually electrically accessible, or accessible in groups comprising a plurality of capacitors.

12. A method according to any of claims 9-11, further comprising the step of providing power regulation means, and regulate, using said power regulation means, an amount of power being absorbed in the power absorption means.

13. A method according to claim 12, wherein the power regulation means comprises first and second controllable switching elements, and wherein said first and second controllable switching means are operated in an at least partly conducting mode of operation during the grid fault.

14. A method according to claim 13, further comprising the step of providing control means, and control, using said control means, the first and second controllable switching elements during the grid fault.

15. A method according to claim 13 or 14, wherein the first and second controllable switching elements are arranged in an anti-parallel configuration.

16. A method according to any of claims 13-15, wherein the first and second controllable switching elements comprise a first and a second thyristor, respectively, or comprise a first and a second IGBT, respectively.

17. An electrical arrangement for maintaining essentially normal working conditions of a wind turbine comprising an externally magnetised generator during a grid fault, the system comprising
- means for electrically disconnecting the externally magnetised generator of the wind turbine from an associated power supply grid during grid faults,
- energy storing means adapted to provide electrical energy to the externally magnetised generator of the wind turbine during the grid fault so that said externally magnetised generator essentially maintains its magnetisation during the grid fault, and
- power absorption means adapted to absorb electrical power generated by the externally magnetised generator during the grid fault.

18. An electrical arrangement according to claim 17, wherein the power absorption means comprises one or more power resistors, said one or more power resistors being individually electrically accessible, or accessible in groups comprising a plurality of power resistors.

19. An electrical arrangement according to claim 17 or 18, wherein the energy storing means comprises one or more capacitors, said one or more capacitors being individually electrically accessible, or accessible in groups comprising a plurality of capacitors.

20. An electrical arrangement according to any of claims 17-19, further comprising power regulation means adapted to regulate an amount of power being absorbed in the power absorption means.

21. An electrical arrangement according to claim 20, wherein the power regulation means comprises first and second controllable switching elements adapted to be operated in an at least partly conducting mode of operation during the grid fault.

22. An electrical arrangement according to claim 21, further comprising control means adapted to control the first and second controllable switching elements.

23. An electrical arrangement according to claim 21 or 22, wherein the first and second controllable switching elements are arranged in an anti-parallel configuration.

24. An electrical arrangement according to any of claims 21-23, wherein the first and second controllable switching elements comprise a first and a second thyristor, respectively, or comprise a first and a second IGBT, respectively.
